# EUROPEAN PATENT SPECIFICATION

(11) **EP 2 239 058 B1**
(45) Date of publication and mention of the grant of the patent: **10.05.2017**
(21) Application number: 10158122.1
(22) Date of filing: 29.03.2010
(51) Int. Cl.: B02C 4/30, B23K 35/30

(54) **Wear-resistant roll and method of making it**
Verschleissfeste Rolle und Verfahren für deren Herstellung
Cylindre à revêtement résistant à l'usure et procédé pour sa fabrication

(30) Priority: 01.04.2009 EP 09157088
(43) Date of publication of application: 13.10.2010
(73) Proprietor: MEC Holding GmbH, 65812 Bad Soden (DE)
(72) Inventor: Heath, Gary Robert, 1802 Corseaux (CH)
(74) Representative: Staudt, Armin Walter

(56) References cited:
- EP-A1- 0 516 952
- EP-B1- 0 659 108
- DE-A1- 4 431 563

## Description

The present invention relates to an improved roll construction for a roller press, comprising a cylindrical press roll having an outer cylindrical pressing surface for use with an opposing roll, and a plurality of wear-resistant surface members (studs), wherein the free ends of the studs protrude radially from the surface of the roll and spaces between the studs are filled with a matrix material.

Furthermore, the present invention relates to a method of making the roll.

### Technical background

In the mineral and cement industries hard particles need to be ground to small fractions. A number of methods exist and a leading and growing method is High Pressure Roller Grinding (HPRG). Equipment availability and the overall cost of grinding facilities utilizing roller presses are significantly influenced by the service life of wear parts, in particular the durability of the grinding rollers.

There is a need in design for a coating on the rollers to protect them against wear. In the past this was simple weld overlay with FeCr alloys. To increase the wear resistance, it was realized that there must be a move from weld overlay to harder materials and several systems were developed.

One system is the HEXADUR® process, which provides a highly abrasion resistant material for wear protection for grinding rollers. The name HEXADUR has been derived from the shape and arrangement of hard metal hexagons which are fixed by hot isostatic pressed (HIP) on to a base metal via a matrix.

The disadvantages are the expense, limited size of the parts that can be produced, as well as lack of repair on site possibilities.

A second system is the "Polycom process" which focused on placing studs in holes drilled into the surface of the roller. The core of the patent is that the stud surface is raised above the surface of the roller. The ground stone/cement then fills in the space between the studs and acts as an auto protection for the studs.

Another process has been found that uses sintered WCCo tiles and "flood weld" them using plasma transferred arc (PTA) or other welding process with a Nickel based matrix with a slightly softer hardness.

The matrix and the tile are the same height and it does not use HIP. However, it still has several disadvantages: Cost of the WC tiles is high; impact resistance of sintered WC tiles is low; the WC tiles are only bonded by a thin film of Ni-based matrix and there is a risk they detach, there is a limit to the thickness of the tiles and thick roller layers need to be made up of several layers, with all interface problems that could bring and the additional costs.

EP 0 516 952 A1 describes a wear resistant roll for a roller press with a pressing surface on which a plurality of spaced wear-resistant surface members is provided. The space between the surface members is filled with a matrix material, for example of ceramics or a plastic material containing ceramics.

Furthermore, a roll for a roller press with a plurality of bolts welded to its surface is known form DE 44 31 563 A1. The bolts are joined with the roll surface by friction welding or arc welding. The space between the bolts is not filled by any matrix material.

From EP 0 659 108 B1 a roller press for processing abrasive materials is known. The roller press comprises two press rolls having a wear-layer comprising hard bodies of highly wear resistant material. The space between the hard bodies is filled with a material of a different wear resistance.

### Object of the invention

An object of the invention is to provide an improved pressing roller which is capable of operating in an extremely high force nip environment with markedly reduced wear of the grinding surface as compared with rolls having constructions of the type heretofore known in the art.

It is a further object of the invention to provide a fast and low cost method for manufacturing a roll for a roller press with high reliability.

With respect to the roll for a roller press this object is achieved by a roll having the features of claim 1. It is characterized by studs which are fixed by welding to the roll, and the matrix material being softer than the hardest material of which the studs are made, whereby filling the spaces between the studs is performed by flood welding.

The basic idea is to use a wear resistant stud that is welded to the roller base. It serves as a replacement for hard particles (WC) or metal insert members as known in the prior art (Hexadur tile or Polycom system).

The matrix is usually an alloy based on Ni or Fe. Filling the spaces between the studs is performed by flood welding. The term flood welding was coined to describe a unique method of depositing vast amounts of weld metal. It can be made by deposition from a wire, electrode, powder deposited by the usual methods (welding, PTA, brazing, spraying), thereby flooding around the studs.

The studs are stabilized by the matrix material and additionally - with operation for grounding material - by the ground material itself. The reason for that is that as a result of wear of the softer matrix material the studs will protrude from the matrix as to form pockets between adjacent studs, and the pockets will be filled with ground material. Therefore, shortly after beginning of the operation for grounding material, nearly the whole outer surface of the roll is covered with the grounded material having the same hardness as the material to be grounded. The grounded material is best suited for stabilizing the studs and protecting the softer matrix material from further wear.

The following are preferred embodiments of the roll.

Preferably flood welding is performed with PTA.

Flood welding occurs such that before operation of the roll in a grinding process, the free ends of the embedded studs have nearly the same level as the matrix material.

Low cost and good weldability can achieved if t at least a part of the studs is made of an iron based alloy.

Preferably, the studs are fixed on the roll by bold welding. This is a fast process which does not require the making of holes for inserting any inserting members. Good results were achieved by using studs which comprise a wear resistant core, surrounded by a metal stud casing. The studs may be such elements as known from DE 20 2004 007 809 U1, made of low cost steel with a head that has a wear resistant pellet integrated into its design.

With respect to the method of manufacturing a roll for a roller press the above object is achieved by a method comprising the features of claim 7. It comprises the following steps: forming a cylindrical press roll having an outer cylindrical pressing surface for use with an opposing roll, fixing a plurality of wear resistant surface members (studs) to the roll surface at spaced intervals having a hardness greater than the roll surface, so that free ends of the studs protrude radially from the surface of the roll, and filing the spaces between the studs with a matrix material, whereby the studs are fixed by welding to the roll, and the matrix material being softer than the hardest material of which the studs are made, whereby filling the spaces between the studs is performed by flood welding.

The basic idea is to use a wear resistant stud that is welded to the roller base. Fixing of the studs by welding is a fast and reliable low cost process. The studs are stabilized by the matrix material and additionally - with operation for grounding material - by the ground material itself. The reason for that is that as a result of wear of the softer matrix material the studs will protrude from the matrix as to form pockets between adjacent studs, and the pockets will be filled with ground material. Therefore, shortly after beginning of the operation for grounding material, nearly the whole outer surface of the roll is covered with the grounded material having the same hardness as the material to be grounded. The grounded material is best suited for stabilizing the studs and protecting the softer matrix material from further wear. The filling of the spaces between the studs is performed by flood welding.

The following are preferred embodiments of the method.

The flood welding is preferably performed with PTA.

At least a part of the studs is made from an iron based alloy. And the studs are fixed on the roll by bold welding.

The explanation above refers to a wear resistant surface layer of a milling member in form of a roll. Apart from this the same design of the wear resistant surface layer and the same method for producing the surface layer can be applied to a milling member in form of a plate.

### Short description of the drawings

In the drawings schematically
- **Fig.1**: a plan view of opposed grinding rolls of a two roller machine employing welded wear-resistant studs in accordance with the principles of the invention,
- **Fig. 2**: a preferred embodiment of a stud welded to the rolls shown in Fig. 1 in a cross section,
- **Fig. 3 to Fig. 6**: process steps for making the rolls of Fig. 1 according of the method of the invention.

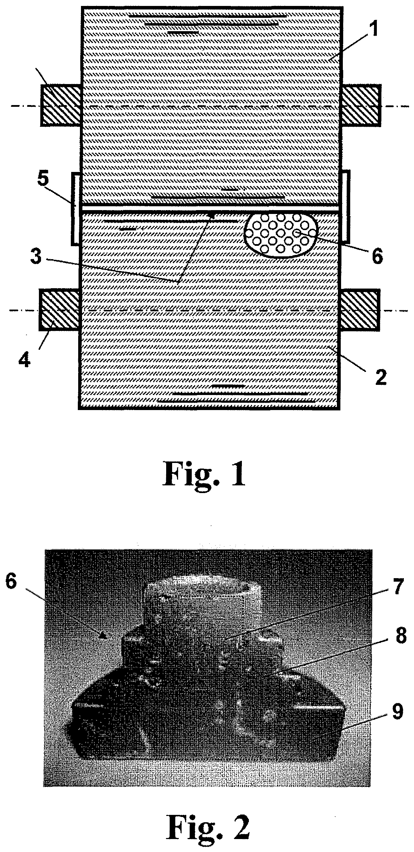

**Fig. 1** illustrates a two roller press for comminution of granular material by interparticle crushing. The press is formed between cylindrical rolls 1 and 2 which form a press nip 3 therebetween. The rolls are suitably supported on high force bearings 4 with means for adjusting the nip width and pressure to obtain the nip forces required for interparticle crushing. Granular material is supplied from above the nip by a suitable product delivery shaft. End plates 5 positioned at the end of the nip 3 for aiding in retaining material and preventing it from exiting axially out the ends of the nip 3. A suitable receiving means is provided beneath the nip for receiving the comminuted material. In a partial view a plurality of wear-resistant studs 6 are shown, which are welded to the cylindrical surface of the rolls 1, 2.

**Fig. 2** shows a photo of a stud 6 in a longitudinal cross section. The stud 6 is made of a wear resistant core 7 made of an Fe-based alloy, surrounded by a metal stud casing 9 made of a tough steel and a base 8 made of low cost steel. Such studs are known from DE 20 2004 007 809 U1.

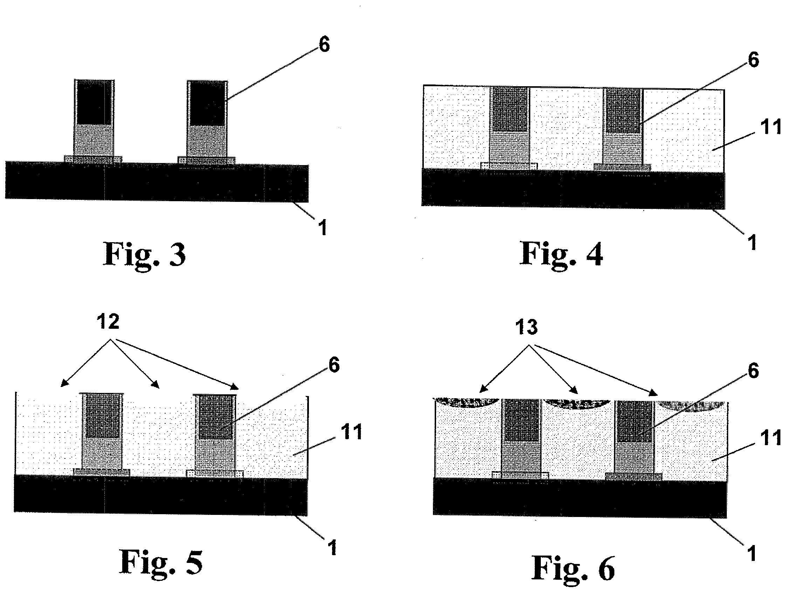

In **Fig. 3 to 6** a preferred process for manufacturing the rolls 1, 2 is shown. The studs 6 are welded the surface of the roll 1 by bold welding (Fig. 3). Then, the space between the studs 6 is filled with a matrix material (Ni-based alloy) which is softer than the casing 9 of the studs 6 by flood welding with PTA. As a result, the studs 6 are completely embedded in the matrix material having the same height as the stud top (Fig. 4). With operation and wear of the matrix material, the studs 6 will protrude from the matrix 11 and pockets 12 will form between the studs 6 (Fig. 5). The pockets 12 will be filled with ground material 13. The resulting surface is essentially flat and it consists of compacted wear and grounded material and the studs, whereby the compacted wear and grounded material works as an optimal embedding for the studs.

The invention has the following advantages:
- Welded with large surface area
- good bonding of the hard wear part even with impact
- Hard phase is a low cost Fe-based alloy, surrounded by tough steel
- Studs can be replaced on site
- The studs can have a high stud, so no need for multi layers

## Claims

1. A roll for a roller press, comprising a cylindrical press roll (1, 2) having an outer cylindrical pressing surface for use with an opposing roll (1, 2), and a plurality of wear-resistant studs (6), wherein the free ends of the studs (6) protrude radially from the surface of the roll and spaces between the studs (6) are filled with a matrix material (11) and whereby the studs (6) are fixed by welding to the roll, and the matrix material (11) being softer than the hardest material of which the studs (6) are made, **characterised in that** filling the spaces between the studs (6) is performed by flood welding.

2. A roll according to claim 1, **characterized in that** flood welding is performed with PTA.

3. A roll according to any of the preceding claims, **characterized in that** the free ends of the embedded studs have nearly the same level as the matrix material (11).

4. A roll according to any of the preceding claims, **characterized in that** at least a part of the studs (6) is made of an iron based alloy.

5. A roll according to any of the preceding claims, **characterized in that** the studs (6) are fixed on the roll (1, 2) by bold welding.

6. A roll according to any of the preceding claims, **characterized in that** the studs (6) comprise a wear resistant core (7), surrounded by a metal stud casing (9).

7. The method of manufacturing a roll for a roller press comprising the steps: forming a cylindrical press roll (1, 2) having an outer cylindrical pressing surface for use with an opposing roll (1, 2), fixing a plurality of wear resistant studs (6) to the roll surface at spaced intervals having a hardness greater than the roll surface, so that free ends of the studs (6) protrude radially from the surface of the roll (1, 2), and filing the spaces between the studs (6) with a matrix material (11), whereby the studs (6) are fixed by welding to the roll (1, 2), and the matrix material (11) being softer than the hardest material of which the studs (6) are made, whereby filling the spaces between the studs (6) is performed by flood welding.

8. Method according to claim 7, **characterized in that** flood welding is performed with PTA.

9. Method according to any of the preceding claims 7 to 8, **characterized in that** at least a part of the studs (6) is made from an iron based alloy.

10. Method according to any of the preceding claims 7 to 9, **characterized in that** the studs (6) are fixed on the roll (1, 2) by bold welding.

11. Method according to any of the preceding claims 7 to 10, **characterized in that** the free ends of the embedded studs have nearly the same level as the matrix material (11), and with operation for grounding material as a result of wear of the matrix material (11) the studs (6) will protrude from the matrix as to form a pocket between adjacent studs (6), and the pocket will be filled with ground material.

## Patentansprüche

1. Walze für eine Walzenpresse, umfassend eine zylindrische Press-Walze (1, 2), die eine äußere zylinderförmige Pressfläche zum Einsatz mit einer Gegen-Walze (1, 2) hat, und die eine Vielzahl von verschleißfesten Stehbolzen (6) aufweist, wobei die freien Enden der Stehbolzen (6) radial von der Walzenoberfläche abstehen und die Zwischenräume zwischen den Stehbolzen (6) mit einem Matrixmaterial (11) gefüllt sind, wobei die Stehbolzen (6) durch Schweißen mit der Walze befestigt sind, und wobei das Matrixmaterial (11) weicher ist als das härteste Stehbolzen-Material, **dadurch gekennzeichnet, dass** die Füllung der Zwischenräume zwischen den Stehbolzen (6) durch Füllschweißen erzeugt ist.

2. Walze nach Anspruch 1, **dadurch gekennzeichnet, dass** das Füllschweißen mittels PTA ausgeführt wird.

3. Walze nach einem der vorhergehenden Ansprüche, **dadurch gekennzeichnet, dass** die freien Enden der eingebetteten Stehbolzen nahezu auf dem Niveau des Matrixmaterials (11) liegen.

4. Walze nach einem der vorhergehenden Ansprüche, dass zumindest ein Teil der Stehbolzen (6) aus einer Legierung auf Eisenbasis erzeugt ist.

5. Walze nach einem der vorhergehenden Ansprüche, **dadurch gekennzeichnet, dass** die Stehbolzen (6) auf der Walze (1; 2) durch Bolzenschweißung befestigt sind.

6. Walze nach einem der vorhergehenden Ansprüche, **dadurch gekennzeichnet, dass** die Stehbolzen (6) einen verschleißfesten Kern (7) umfassen, der von einer metallischen Bolzenhülle (9) umgeben ist.

7. Verfahren zur Herstellung einer Walze für eine Walzenpresse umfassend die Schritte: Bilden einer zylindrische Press-Walze (1, 2), die eine äußere zylinderförmige Pressfläche zum Einsatz mit einer Gegen-Walze (1, 2) hat, Befestigen einer Vielzahl von verschleißfesten Stehbolzen (6) in Intervallabständen an der Walzenoberfläche, die eine höhere Härte als die Walzenoberfläche haben, derart, dass die freien Enden der Stehbolzen (6) radial von der Oberfläche der Walze (1, 2) abstehen, und Füllen der Zwischenräume zwischen den Stehbolzen (6) mit einem Matrixmaterial (11), wobei die Stehbolzen (6) durch Schweißen an der Walze (1, 2) befestigt werden, und wobei das Matrixmaterial (11) weicher ist als das härteste Stehbolzen-Material, und wobei das Füllen der Zwischenräume zwischen den Stehbolzen (6) durch Füllschweißen erfolgt.

8. Verfahren nach Anspruch 2, **dadurch gekennzeichnet, dass** das Füllschweißen mittels PTA durchgeführt wird.

9. Verfahren nach einem der vorhergehenden Ansprüche 7 bis 8, **dadurch gekennzeichnet, dass** zumindest ein Teil der Stehbolzen (6) aus einer Legierung auf Eisenbasis erzeugt ist.

10. Verfahren nach einem der vorhergehenden Ansprüche 7 bis 9, **dadurch gekennzeichnet, dass** die Stehbolzen (6) auf der Walze (1, 2) durch Bolzenschweißung befestigt werden.

11. Verfahren nach einem der vorhergehenden Ansprüche 7 bis 10, **dadurch gekennzeichnet, dass** die freien Enden der eingebetteten Stehbolzen nahezu auf dem Niveau des Matrixmaterials (11) liegen, so dass beim Einsatz zum Zermahlen von Mahlgut infolge von Verschleiß des Matrixmaterials (11) die Stehbolzen (6) aus der Matrix unter Bildung eine Aussparung (pocket) zwischen benachbarten Stehbolzen (6) freigelegt werden, und sich die Aussparung mit Mahlgut auffüllt.

## Revendications

1. Rouleau pour presse à cylindres, comprenant un rouleau presseur cylindrique (1, 2) présentant une surface de pression cylindrique extérieure à utiliser avec un rouleau opposé (1, 2) et une pluralité de goujons résistant à l'abrasion (6), dans lequel les extrémités libres des goujons (6) (studs) font saillie radialement à partir de la surface du rouleau, et des espaces entre les goujons (6) sont remplis avec un matériau de matrice (11), les goujons (6) étant fixés par soudage au rouleau, et le matériau de matrice (11) étant plus mou que le matériau le plus dur à partir duquel les goujons (6) sont fabriqués, **caractérisé en ce que** le remplissage des espaces entre les goujons (6) est réalisé par un soudage sous flux.

2. Rouleau selon la revendication 1, **caractérisé en ce que** le soudage sous flux est réalisé sous PTA.

3. Rouleau selon l'une quelconque des revendications précédentes, **caractérisé en ce que** les extrémités libres des goujons noyés sont pratiquement au même niveau que le matériau de matrice (11).

4. Rouleau selon l'une quelconque des revendications précédentes, **caractérisé en ce qu'**au moins une partie des goujons (6) est fabriquée dans un alliage à base de fer.

5. Rouleau selon l'une quelconque des revendications précédentes, **caractérisé en ce que** les goujons (6) sont fixés sur le rouleau (1, 2) par soudage de boulon.

6. Rouleau selon l'une quelconque des revendications précédentes, **caractérisé en ce que** les goujons (6) comprennent un noyau résistant à l'abrasion (7), entouré d'une enveloppe de goujon métallique (9).

7. Procédé de fabrication d'un rouleau pour presse à cylindres, comprenant les étapes consistant à: former un rouleau presseur cylindrique (1, 2) présentant une surface de pression cylindrique extérieure à utiliser avec un rouleau opposé (1, 2), à fixer une pluralité de goujons résistant à l'abrasion (6) sur la surface de rouleau à des intervalles espacés présentant une dureté supérieure à celle de la surface de rouleau, de sorte que les extrémités libres des goujons (6) font saillie radialement à partir de la surface du rouleau (1, 2), et à remplir les espaces entre les goujons (6) avec un matériau de matrice (11), les goujons (6) étant fixés par soudage au rouleau (1,2), et le matériau de matrice (11) étant plus mou que le matériau le plus dur à partir duquel les goujons (6) sont fabriqués, le remplissage des espaces entre les goujons (6) étant réalisé par un soudage sous flux.

8. Procédé selon la revendication 7, **caractérisé en ce que** le soudage sous flux est réalisé sous PTA.

9. Procédé selon l'une quelconque des revendication 7 à 8, **caractérisé en ce qu'**au moins une partie des goujons (6) est fabriquée dans un alliage à base de fer.

10. Procédé selon l'une quelconque des revendications 7 à 9, **caractérisé en ce que** les goujons (6) sont fixés sur le rouleau (1, 2) par soudage de boulon.

11. Procédé selon l'une quelconque des revendications 7 à 10, **caractérisé en ce que** les extrémités libres des goujons noyés sont pratiquement au même niveau que le matériau de matrice (11), et sous l'action du matériau de broyage, suite à l'abrasion du matériau de matrice (11), les goujons (6) deviennent saillants à partir de la matrice afin de former une poche entre des goujons adjacents (6), et la poche est remplie de matériau broyé.
